# EUROPÄISCHE PATENTSCHRIFT

(11) **EP 1 482 254 B1**
(45) Veröffentlichungstag und Bekanntmachung des Hinweises auf die Patenterteilung: **30.11.2011**
(21) Anmeldenummer: 04009468.2
(22) Anmeldetag: 22.04.2004
(51) Int. Cl.: F24H 1/00, H01M 8/04

(54) **Heizungssystem mit Brennstoffzelleneinrichtung und Verfahren zum Betreiben einer Brennstoffzelleneinrichtung**
Heating system with fuel cell arragement and method of operating a fuel cell arragement
Système de chauffage avec un ensemble pile à combustible et procédé de fonctionnement d'un ensemble pile à combustible

(30) Priorität: 28.05.2003 DE 10325395
(43) Veröffentlichungstag der Anmeldung: 01.12.2004
(73) Patentinhaber: Deutsches Zentrum für Luft- und Raumfahrt e.V., 51147 Köln (DE)
(72) Erfinder: Lindner, Friedrich, Dr., 70771 Leinfelden-Echterdingen (DE); Nedele, Martin, Dr., 72768 Reutlingen (DE); Brinner, Andreas, 71277 Rutesheim (DE)
(74) Vertreter: Hoeger, Stellrecht & Partner Patentanwälte

(56) Entgegenhaltungen:
- EP-A- 1 081 779
- EP-A- 1 098 142
- EP-A- 1 205 992
- DE-A- 4 117 516
- US-B1- 6 468 689

## Beschreibung

Die Erfindung betrifft ein Heizungssystem, welches eine Brennstoffzelleneinrichtung und eine Kühleinrichtung für die Brennstoffzelleneinrichtung umfasst.

Ferner betrifft die Erfindung ein Verfahren zum Betreiben einer Brennstoffzelleneinrichtung, welche gekühlt wird.

Es sind Hausheizungen mit integriertem Brennstoffzellensystem bekannt; es werden dabei elektrische Abgabeleistungen zwischen 1 bis 2 kW erreicht; um auch Spitzenwärmenleistungsbedarfe decken zu können, sind Zusatzbrenner vorgesehen, die eine thermische Leistung zwischen beispielsweise 12 kW und 25 kW liefern können.

Aus der EP 1 205 992 A2 ist ein Brennstoffzellensystem mit wenigstens einer Brennstoffzelle und einer Einrichtung zur Versorgung der wenigstens einen Brennstoffzelle mit Wasserstoff oder einem wasserstoffhaltigem Gas bekannt, wobei bei einem Start oder Kaltstart des Systems einzelne Komponenten der Einrichtung und die wenigstens eine Brennstoffzelle mittels in einem Kühlwassersystem enthaltenen Kühlwassers wärmebeaufschlagbar sind. Das Kühlwassersystem weist eine Isoliereinrichtung zur wärmeisolierenden Speicherung von Kühlwasser auf.

Aus der EP 1 098 142 A2 ist ein Verfahren zur Regelung der thermischen Leistung eines Brennstoffzellensystems bekannt, das ein hydraulisches System mit einer Heizkörperanordnung oder einen Speicher umfasst. Dieses Dokument zeigt ein Heizungsystem und ein Verfahren gemäß den Oberbegriffen der Ansprüche 1 und 35.

Aus der DE 41 17 516 A1 ist eine Einrichtung zur Erzeugung von erwärmtem Brauchwasser bekannt.

Der Erfindung liegt die Aufgabe zugrunde, ein Heizungssystem der eingangs genannten Art zu schaffen, welches sich kompakt mit optimierter Nutzung der Abwärme der Brennstoffzelleneinrichtung bauen lässt.

Diese Aufgabe wird bei dem eingangs genannten Heizungssystem erfindungsgemäß dadurch gelöst, dass ein Latentwärmespeicher an einen Kühlkreis der Kühleinrichtung gekoppelt ist und dass ein Heizkreis an den Latentwärmespeicher gekoppelt ist, wobei Heizmedium durch den Latentwärmespeicher zur Wärmeaufnahme geführt.

Durch einen Latentwärmespeicher lässt sich die latente Wärme (Umwandlungswärme) eines Phasenübergangs speichern. Ein Latentwärmespeicher weist dadurch eine hohe Temperaturkonstanz auf. Erfindungsgemäß wird ein solcher Latentwärmespeicher in den Kühlkreis der Brennstoffzelleneinrichtung integriert. Dadurch ist es einerseits möglich, dass die Brennstoffzelleneinrichtung dynamisch den Anforderungen eines Verbrauchers bezüglich der elektrischen Energieabgabe folgen kann und andererseits die entstehende Abwärme optimal zu Heizzwecken genutzt wird. Dabei bewirkt die Wärmespeicherung nur geringe Temperaturschwankungen im Kühlkreis, so dass die Kühlung der Brennstoffzellen durch die Wärmespeicherung im Latentwärmespeicher nicht wesentlich beeinflusst wird. Vielmehr werden sogar die Temperaturschwankungen minimiert und dadurch wird die Lebensdauer des Brennstoffzellensystems erhöht.

Über das Speichermedium des Latentwärmespeichers lässt sich das Temperaturniveau festlegen, auf dem sich Abwärme von der Brennstoffzelleneinrichtung abführen lässt. Die Abwärme wird dabei durch die Brennstoffzellen selber und durch Peripherieaggregate erzeugt. Dadurch wiederum ist der Regelungsaufwand für die Kühleinrichtung minimiert, wobei insbesondere eine einfache Mengenstromregelung genügt.

Über einen Latentwärmespeicher lassen sich ein Primärkreis (interner Kreis) für die Kühlung der Brennstoffzelleneinrichtung und ein Sekundärkreis (externer Kreis) zur Heizung eines Objekts (beispielsweise eines Hauses oder eines Fahrzeuges) effektiv entkoppeln. Dadurch ist die elektrische Energieabgabe der Brennstoffzelleneinrichtung und die thermische Energieabgabe eines Heizkreises zeitlich entkoppelt möglich. Es kann dann auch ohne daß Zusatzbrenner vorgesehen werden müssen sowohl der elektrische Energiebedarf als auch der thermische Energiebedarf zur Heizung gedeckt werden.

Durch einen Latentwärmespeicher läßt sich eine hohe Speicherkapazität erreichen, wobei ein kompakter Aufbau realisiert ist mit hoher Temperaturkonstanz bezüglich der Beladung und Entladung des Latentwärmespeichers auch auf wechselndem Leistungsniveau. Der Latentwärmespeicher enthält keine beweglichen und wartungsintensiven Bauelemente. Durch entsprechende Auswahl des Speichermaterials ist eine Anpassung an unterschiedliche Temperaturanforderungen möglich.

Ein Wärmeüberschuß läßt sich aus dem Latentwärmespeicher über einen einfachen Kühlkreis (externer Kreis) abführen, wobei vorzugsweise eine Temperaturmessung in dem Latentwärmespeicher erfolgt. Diese Abfuhr läßt sich dabei entkoppeln von der Abwärmeabgabe des Kühlmediums an den Latentwärmespeicher. Der Kühlkreis für den Latentwärmespeicher ist insbesondere ein Heizkreis (bezogen auf eine externe Anwendung).

Da die Wärmeabgabetemperatur des Latentwärmespeichers durch das Speichermaterial festgelegt ist, läßt sich damit auch die Übergabeschnittstelle für thermische Energie von dem Latentwärmespeicher in den Heizkreis auf einfache Weise planen.

Eine laststromgeführte Steuerung der Brennstoffzelleneinrichtung erfordert aufgrund der hohen Temperaturkonstanz des Latentwärmespeichers keine aufwendige Nachregelung der Kühleinrichtung; grundsätzlich genügt eine einfache Mengensteuerung beziehungsweise Mengenregelung für das zugeführte Kühlmedium.

Durch die Ankopplung des Latentwärmespeichers ist auch sichergestellt, dass die Temperatur in der Brennstoffzelleneinrichtung nicht unter eine kritische Schwelle fällt, das heißt die Brennstoffzelleneinrichtung ist vor einer zu niedrigen Temperatur geschützt.

Ein Heizkreis ist als externer Kreis an den Latentwärmespeicher gekoppelt. Heizmedium und insbesondere Heizwasser, welches in dem Heizkreis strömt, ist dann durch den Latentwärmespeicher zur Wärmeaufnahme geführt.

Vorzugsweise ist der Latentwärmespeicher einem Ausgang für Kühlmedium der Brennstoffzelleneinrichtung nachgeschaltet angeordnet. Das Kühlmedium ist durch den Latentwärmespeicher zur Wärmeabgabe geführt, um so effektiv Abwärme speichern zu können.

Vorzugsweise ist mittels des Latentwärmespeichers die Temperatur von der Brennstoffzelleneinrichtung zugeführtem Kühlmedium eingestellt. Durch den Latentwärmespeicher ist eine Temperatur hoher Konstanz vorgebbar, nämlich die Phasenwechseltemperatur des Speichermediums des Latentwärmespeichers. Das Kühlmedium, welches den Latentwärmespeicher durchströmt hat, weist dadurch eine Temperatur hoher Konstanz auf. Dies kann dazu benutzt werden, um mittels einfacher Regelungsprozesse die Temperatur für die Kühlmediumzuführung zu der Brennstoffzelleneinrichtung einzuregeln.

Insbesondere erfolgt eine Mengensteuerung und/oder Mengenregelung des der Brennstoffzelleneinrichtung zugeführten Kühlmediums, wobei so auf einfache Weise eine Temperatur einstellbar ist. Es kann dann auch einfache Weise eine Anpassung an eine dynamische Leistungsabgabe der Brennstoffzelleneinrichtung erfolgen, ohne daß eine aufwendige Nachregelung der Betriebstemperatur der Brennstoffzelleneinrichtung und der Kühlmedienströme notwendig ist. Dadurch wiederum läßt sich ein effizienter und dauerhafter Betrieb der Brennstoffzelleneinrichtung erreichen, da Temperaturschwankungen im Kühlkreis während des dynamischen Betriebs minimiert sind.

Ganz besonders vorteilhaft ist es, wenn der Kühlkreis eine Bypassleitung für den Latentwärmespeicher umfaßt. Über eine solche Bypassleitung läßt sich insbesondere mengengesteuert "warmes" Kühlmedium und im Latentwärmespeicher abgekühltes Kühlmedium mischen, um so eine gewünschte Temperatur von Kühlmedium, welches der Brennstoffzelleneinrichtung zugeführt wird, einzustellen. Diese Einstellung läßt sich auf einfache Weise erreichen.

Insbesondere ist die Bypassleitung parallel zum Latentwärmespeicher angeordnet, um so eine einfache Mischbarkeit zu erhalten.

Es ist dann günstig, wenn ein Ausgang der Bypassleitung mit einem Eingang der Brennstoffzelleneinrichtung für Kühlmedium verbunden ist, so daß eine Kühlmediummischung mit der eingestellten Temperatur der Brennstoffzelleneinrichtung zuführbar ist.

Günstig ist es ferner, wenn ein Eingang bezogen auf die Strömungsrichtung von Kühlmedium der Brennstoffzelleneinrichtung nachgeschaltet ist. Dadurch läßt sich "warmes" Kühlmedium in die Bypassleitung einkoppeln.

Es kann auch vorgesehen sein, daß ein Eingang der Bypassleitung bezogen auf die Strömungsrichtung von Kühlmedium der Brennstoffzelleneinrichtung vorgeschaltet angeordnet ist. Dies ist insbesondere vorgesehen, wenn als Kühlmedium Luft eingesetzt wird und ein Kühlkreis offen ist. Luft dient bei Polymer-Elektrolyt-Membran-Brennstoffzellen gleichzeitig als Träger für das Oxidationsmittel, welches in diesem Falls Luftsauerstoff ist. Es muß daher ständig Frischluft nachgeführt werden. Damit die Temperatur der zugeführten Luft auf einen optimalen Wert einstellbar ist, ist es dann günstig, wenn die Bypassleitung der Brennstoffzelleneinrichtung vorgeschaltet ist.

Ganz besonders vorteilhaft ist es, wenn die Menge an Kühlmedium, welche durch die Bypassleitung strömt, steuerbar und/oder regelbar ist. Es läßt sich dann über eine Mengensteuerung beziehungsweise Mengenregelung die Temperatur des Kühlmediums, welches der Brennstoffzelleneinrichtung zugeführt ist, regeln. Eine solche Regelung läßt sich mit geringem Aufwand durchführen.

Insbesondere erfolgt eine Mengensteuerung und/oder Mengenregelung des der Brennstoffzelleneinrichtung zugeführten Kühlmediums über Einkopplung von Kühlmedium aus der Bypassleitung.

Es ist dazu in der Bypassleitung ein Durchflußregler angeordnet, über den eine entsprechende Mengensteuerung durchführbar ist.

Die Durchflußregelung wiederum ist vorzugsweise über die Temperatur von Kühlmedium gesteuert, um so eine Temperaturregelung bezüglich des Kühlmediums, welches der Brennstoffzelleneinrichtung zugeführt wird, zu erhalten.

Es kann vorgesehen sein, daß ein Temperatursensor zur Messung der Temperatur des der Brennstoffzelleneinrichtung zugeführten Kühlmedium vorgesehen ist. In einer alternativen oder zusätzlichen Ausführung ist ein Temperatursensor zur Messung der Temperatur des von der Brennstoffzelleneinrichtung abgeführten Kühlmediums vorgesehen.

Es kann vorgesehen sein, daß der Kühlkreis ein geschlossener Kreis ist; dies ist insbesondere vorteilhaft, wenn Wasser als Kühlmedium eingesetzt wird. Bei einem geschlossenen Kreis ist der konstruktive Aufwand zur Ausbildung einer Kühleinrichtung erniedrigt; es muß höchstens eine Vorrichtung zur Wasser-Nachspeisung für verbrauchtes Wasser vorgesehen werden.

Insbesondere ist dann ein Eingang für Kühlmedium des Latentwärmespeichers an einen Ausgang für Kühlmedium der Brennstoffzelleneinrichtung gekoppelt und ein mit diesem Eingang verbundener Ausgang des Latentwärmespeichers ist an einen Eingang für Kühlmedium der Brennstoffzelleneinrichtung gekoppelt.

Es kann auch vorgesehen sein, daß der Kühlkreis offen ist; dies ist insbesondere vorteilhaft, wenn Luft als Kühlmedium eingesetzt wird.

Der Latentwärmespeicher umfaßt vorzugsweise dann eine erste Durchlaufstrecke für Kühlmedium zur Zuführung zu der Brennstoffzelleneinrichtung und eine zweite Durchlaufstrecke für Kühlmedium zur Abführung von der Brennstoffzelleneinrichtung. Bei Durchlaufen der zweiten Durchlaufstrecke gibt das Kühlmedium Abwärme an den Latentwärmespeicher ab, um diese in einem Heizkreis nutzen zu können. Über Durchlaufen der ersten Durchlaufstrecke läßt sich insbesondere mit Hilfe einer zusätzlichen Bypassleitung eine Temperaturregelung für der Brennstoffzelleneinrichtung zugeführtes Kühlmedium realisieren.

Ganz besonders vorteilhaft ist es, wenn die Brennstoffzelleneinrichtung eine oder mehrere Niedertemperatur-Brennstoffzellen wie Polymer-Elektrolyt-Membran-Brennstoffzellen oder Direkt-Methanol-Brennstoffzellen umfaßt. Solche Brennstoffzellen weisen Betriebstemperaturen (unterhalb zirka 100° C) auf, bei denen sich die Abwärme effektiv für ein Heizungssystem nutzen läßt.

Es kann vorgesehen sein, daß als Kühlmedium Wasser eingesetzt ist. Alternativ kann als Kühlmedium Wasser und Luft eingesetzt sein. In diesem Falle wird auch nicht verbrauchte Luft zur Kühlung verwendet.

Vorzugsweise ist dann ein Trennvorrichtung für Wasser und Luft vorgesehen, so daß dem Latentwärmespeicher luftfreies Wasser zugeführt wird.

Vorzugsweise ist die Trennvorrichtung dem Latentwärmespeicher vorgeschaltet.

Alternativ ist es möglich, als Kühlmedium Luft einzusetzen.

Es ist dann vorteilhaft, wenn Luft vor Einkopplung in die Brennstoffzelleneinrichtung durch den Latentwärmespeicher führbar ist, um so eine gewünschte Temperatur unter minimiertem Regelungsaufwand einstellen zu können.

Eine kompakte Bauweise läßt sich erreichen, wenn ein Brennstoffzellenblock vom Latentwärmespeicher umgeben ist. Es läßt sich dann in einem Behälter sowohl der Brennstoffzellenblock als auch der Latentwärmespeicher anordnen. Ein solches Heizungssystem läßt sich vorteilhafterweise mobil einsetzen. Durch eine solche Anordnung läßt sich auch gewährleisten, daß das Brennstoffzellensystem auf einer Mindesttemperatur gehalten wird.

Insbesondere ist ein Behälter mit einem Innenraum vorgesehen, in welchem der Brennstoffzellenblock angeordnet ist, und der Innenraum ist von einem Raum umgeben, in dem Latentwärmespeichermaterial angeordnet ist.

Der Behälter weist dann Anschlüsse für Medien-Zufuhr und Medien-Abfuhr auf. Insbesondere weist er Anschlüsse für die Zuführung und Abführung von Heizmedium in einem Heizkreis auf, Anschlüsse für die Zuführung und Abführung von Kühlmedium in einem Kühlkreis und ferner Anschlüsse für die Zuführung und Abführung von Brennstoff und Oxidationsmittel auf.

Das erfindungsgemäße Heizungssystem läßt sich zur Beheizung eines Hauses verwenden und weiterhin auch zur elektrischen Versorgung des Hauses. Da über den Latentwärmespeicher eine effektive Entkopplung zwischen der Wärmeabgabe an den Heizkreis und elektrische Energieabgabe der Brennstoffzelleneinrichtung möglich ist, lässt sich sowohl der elektrische Energiebedarf decken als auch der thermische Energiebedarf auch bezüglich des Spitzenleistungsbedarfs. Ein entsprechend dimensioniertes Brennstoffzellensystem liefert über den Tag gemittelt genügend Wärme für eine Hausheizung. Durch den Latentwärmespeicher lässt sich diese Abwärme speichern, wobei gleichzeitig der elektrische Spitzenleistungsbedarf deckbar ist.

Das erfindungsgemäße Heizungssystem lässt sich auch zur Beheizung eines Fahrzeuges verwenden, wobei auch der elektrische Energiebedarf des Fahrzeugs deckbar ist.

Der Erfindung liegt ferner die Aufgabe zugrunde, ein Verfahren der eingangs genannten Art bereitzustellen bei welchem der Regelungsaufwand minimiert ist.

Diese Aufgabe wir bei dem eingangs genannten Verfahren dadurch gelöst, dass das Kühlmedium in einem Kühlkreis durch einen Latentwärmespeicher geführt wird und dass Heizwärme von dem Latentwärmespeicher abgeführt wird.

Der Latentwärmespeicher stellt ein konstantes Temperaturniveau bereit. Dadurch lässt sich eine Selbstregelung der Brennstoffzelleneinrichtung erreichen, so dass der Regelungsaufwand minimiert ist.

Das erfindungsgemäße Verfahren weist die weiteren bereits im Zusammenhang mit dem erfindungsgemäßen Heizungssystem erläuterten Vorteile auf.

Weitere vorteilhafte Ausgestaltungen des erfindungsgemäßen Verfahrens wurden ebenfalls bereits im Zusammenhang mit dem erfindungsgemäßen Heizungssystem erläutert.

Die nachfolgende Beschreibung bevorzugter Ausführungsformen dient im Zusammenhang mit der Zeichnung der näheren Erläuterung der Erfindung. Es zeigen:
- Figur 1: eine Blockschaltbilddarstellung eines ersten Ausführungsbeispiels eines erfindungsgemäßen Heizungssystems;
- Figur 2: eine Blockschaltbilddarstellung eines zweiten Ausführungsbeispiels eines erfindungsgemäßen Heizungssystems;
- Figur 3: eine Blockschaltbilddarstellung eines dritten Ausführungsbeispiels eines erfindungsgemäßen Heizungssystems;
- Figur 4: eine Blockschaltbilddarstellung eines vierten Ausführungsbeispiels eines erfindungsgemäßen Heizungssystems und
- Figur 5: eine seitliche Schnittansicht eines fünften Ausführungsbeispiels eines Heizungssystems, welches den prinzipiellen Aufbau hat wie das Ausführungsbeispiel gemäß Figur 4.

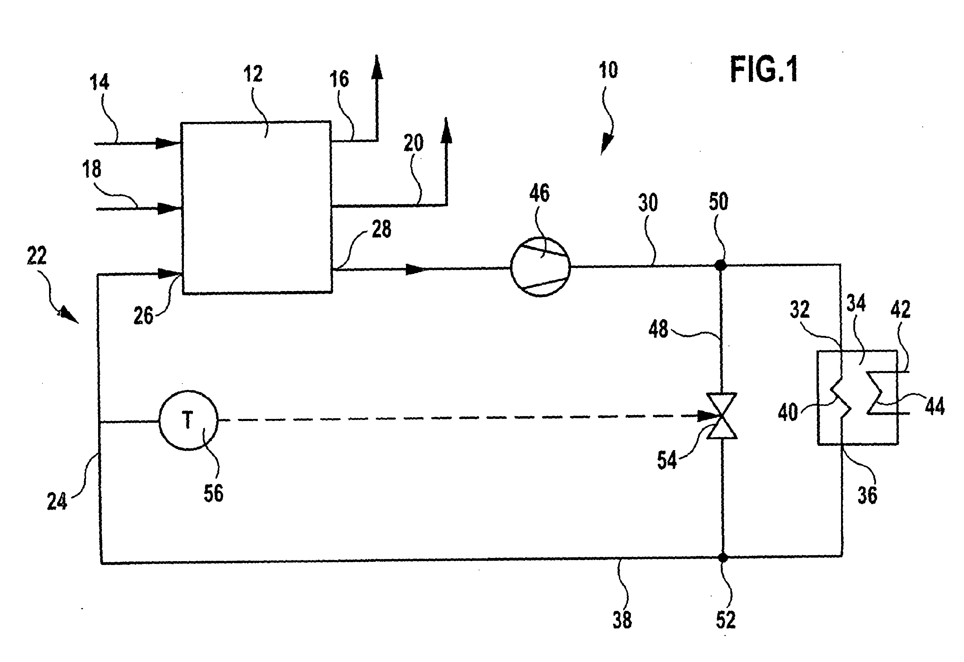

Ein erstes Ausführungsbeispiel eines erfindungsgemäßen Heizungssystems, welches in Figur 1 als Ganzes mit 10 bezeichnet ist, weist eine Brennstoffzelleneinrichtung 12 auf. Diese umfaßt Brennstoffzellen, welche zu einem oder mehreren Brennstoffzellenblocks zusammengefaßt sind. Bei den Brennstoffzellen handelt es sich um Niedertemperatur-Brennstoffzellen wie beispielsweise Polymer-Elektrolyt-Membran-Brennstoffzellen (PEFC) oder Direkt-Methanol-Brennstoffzellen.

Die Brennstoffzelleneinrichtung 12 weist jeweilige Zuführungseinrichtungen und Abführungseinrichtungen für Brennstoff und Oxidationsmittel auf. Insbesondere ist eine Zuführungseinrichtung 14 für Brennstoff und eine Abführungseinrichtung 16 für Brennstoff, welcher bei den elektrochemischen Reaktionen in der Brennstoffzelleneinrichtung 12 nicht verbraucht wurde, vorgesehen.

Ferner ist eine Zuführungseinrichtung 18 für Oxidationsmittel und eine Abführungseinrichtung 20 für nicht verbrauchtes Oxidationsmittel vorgesehen.

Bei Polymer-Elektrolyt-Membran-Brennstoffzellen wird als Brennstoff Wasserstoff eingesetzt und als Oxidationsmittel Luftsauerstoff oder reiner Sauerstoff.

Es ist eine als Ganzes mit 22 bezeichnete Kühleinrichtung vorgesehen, mittels welcher die Abwärme der Brennstoffzelleneinrichtung 12 abführbar ist. Die chemische Umsetzung von Brennstoff und Oxidationsmittel in der Brennstoffzelleneinrichtung 12 bewirkt einen Stromfluß. Bei einer Brennstoffumsetzung von 100 % ergibt sich ein theoretischer maximaler Wirkungsgrad von 84 %. Heutzutage lassen sich Wirkungsgrade von 50 % erreichen. Die Abwärme der Brennstoffzelleneinrichtung 12 setzt sich aus der Abwärme der chemischen Umsetzung und aus der Abwärme von Peripherieaggregaten zusammen. Die Abwärme der Brennstoffzelleneinrichtung 12 läßt sich über die Kühleinrichtung 22 zu Heizzwecken nutzen.

Die Kühleinrichtung 22 umfaßt dazu einen Kühlkreis 24. Dieser bildet einen primären Kreis, wie unten noch näher erläutert wird. Der Kühlkreis ist an einen Eingang 26 für Kühlmedium der Brennstoffzelleneinrichtung 12 gekoppelt. Ferner ist er an einen Ausgang 28 für Kühlmedium der Brennstoffzelleneinrichtung 12 gekoppelt. Mittels des Kühlkreises 24 läßt sich Kühlmedium durch die Brennstoffzelleneinrichtung 12 transportieren, um Abwärme abzuführen und damit die Brennstoffzelleneinrichtung 12 zu kühlen.

Bei dem in Figur 1 gezeigten Ausführungsbeispiel ist der Kühlkreis 24 geschlossen, das heißt der Ausgang 28 ist mit dem Eingang 26 verbunden.

Von dem Ausgang 28 führt eine Leitung 30 zu einem Eingang 32 eines Latentwärmespeichers 34. Der Latentwärmespeicher 34 weist einen Ausgang 36 auf, welcher wiederum über eine Leitung 38 mit dem Eingang 26 der Brennstoffzelleneinrichtung 12 verbunden ist.

Der Eingang 32 und der Ausgang 36 des Latentwärmespeichers 34 sind über eine Durchlaufstrecke 40 verbunden. Diese Durchlaufstrecke ist beispielsweise durch ein wendelförmig ausgebildetes Rohr gebildet, welches in einem Latentwärmespeichermedium verläuft.

Bei Latentwärmespeichern wird die latente Wärme (Umwandlungswärme) eines Phasenüberganges gespeichert. Insbesondere werden bei den hier in Frage kommenden Temperaturen Speichermedien eingesetzt, welche Fest-Flüssig-Phasenübergänge zeigen; zwischen der festen und der flüssigen Phase liegen relativ geringe Volumenunterschiede vor. Ein beispielhaftes Material ist Natriumacetat mit einer Phasenwechseltemperatur von 56° C.

Ein Latentwärmespeicher ist durch die Temperatur des Phasenübergangs (Phasenwechseltemperatur) charakterisiert. Im Gegensatz zur Speicherung von Wärme als fühlbare Wärme erfolgt beim Latentwärmespeicher keine Temperaturerhöhung bei der Wärmespeicherung.

Abwärme, welche von dem Kühlmedium bei Durchströmung der Brennstoffzelleneinrichtung 12 aufgenommen wird, läßt sich beim Durchlaufen der Durchlaufstrecke 40 an den Latentwärmespeicher 34 abgeben, wobei diese Wärme in dem Latentspeichermedium des Latentwärmespeichers 34 eben als latente Wärme gespeichert wird.

Ein Heizkreis 42 ist als sekundärer Kreis an den Latentwärmespeicher 34 gekoppelt, wobei dieser Heizkreis 42 ebenfalls eine Durchlaufstrecke 44 aufweist, welche durch den Latentwärmespeicher 34 verläuft. Diese Durchlaufstrecke 44 ist beispielsweise durch ein wendelförmig ausgestaltetes Rohr gebildet. Ein Heizmedium wie insbesondere Wasser, welches die Durchlaufstrecke 44 durchströmt, kann Wärme aufnehmen und abtransportieren. Es läßt sich damit beispielsweise ein Haus oder ein Fahrzeug beheizen.

Durch die Brennstoffzelleneinrichtung 12 selber wird elektrische Energie bereitgestellt.

In dem Kühlkreis 34 ist eine Pumpe 46 angeordnet, um Kühlmedium von der Brennstoffzelleneinrichtung 12 zu dem Latentwärmespeicher 34 zu befördern und für den Rücktransport von Kühlmedium, welches die Durchlaufstrecke 40 durchlaufen hat, zu dem Eingang 26 der Brennstoffzelleneinrichtung 12 zu sorgen.

Es ist eine Bypassleitung 48 vorgesehen, welche einen Eingang 50 aufweist, der mit dem Ausgang 28 verbunden ist, und einen Ausgang 52 aufweist, welche an den Eingang 26 der Brennstoffzelleneinrichtung 12 gekoppelt ist. Die Bypassleitung 48 ist parallel zu dem Latentwärmespeicher 34 und insbesondere parallel zu der Durchlaufstrecke 40 angeordnet. Dazu sind der Eingang 50 der Bypassleitung 48 und der Eingang 32 des Latentwärmespeichers 34 miteinander verbunden. Ferner sind der Ausgang 36 des Latentwärmespeichers 34 und der Ausgang 52 der Bypassleitung 48 miteinander verbunden.

Kühlmedium, welches die Bypassleitung 48 durchströmt, wird an dem Latentwärmespeicher 34 vorbei geführt, das heißt dieses Kühlmedium gibt keine Abwärme ab. Der Eingang 50 der Bypassleitung 48 ist als Ausgang einer Abzweigung 53 ausgebildet, wobei ein Eingang dieser Abzweigung 53 mit dem Ausgang 28 der Brennstoffzelleneinrichtung 12 verbunden ist (eventuell mit der Pumpe 46 dazwischen angeordnet), und ein weiterer Ausgang dieser Abzweigung 53 ist mit dem Eingang 32 des Latentwärmespeichers 34 verbunden.

Der Ausgang 52 der Bypassleitung 48 bildet einen Eingang einer Sammelvorrichtung 55, wobei ein weiterer Eingang mit dem Ausgang 36 des Latentwärmespeichers 34 verbunden ist. Ein Ausgang dieser Sammelvorrichtung 55 ist an den Eingang 26 der Brennstoffzelleneinrichtung 12 gekoppelt.

In der Bypassleitung 48 sitzt ein Durchflußregler 54. Dieser Durchflußregler ist steuerbar beziehungsweise regelbar, um die Menge des durch die Bypassleitung 48 strömenden Kühlmediums einstellen zu können. Kühlmedium, welches die Bypassleitung 48 durchströmt, hat im wesentlichen die Temperatur des Kühlmediums, wie es aus der Brennstoffzelleneinrichtung 12 austritt. Kühlmedium, welches den Latentwärmespeicher 34 durchlaufen hat, hat Wärme an das Speichermedium dort abgegeben und weist im wesentlichen die Temperatur des Latentwärmespeichers 34 auf. Durch Einstellung der Durchflußmenge durch die Bypassleitung 48 läßt sich somit die Temperatur von Kühlmedium, welches durch die Leitung 38 zu der Brennstoffzelleneinrichtung 12 geführt wird, einstellen, da der Anteil von warmem Kühlmedium in der Kühlmediummenge, welche in der Leitung 38 transportiert wird, einstellbar ist.

Insbesondere ist in der Leitung 38 dem Eingang 26 der Brennstoffzelleneinrichtung 12 vorgeschaltet ein Temperatursensor 56 angeordnet, welcher die Temperatur des Kühlmediums, das der Brennstoffzelleneinrichtung 12 zugeführt wird, ermittelt. Um in einem Regelprozeß eine gewünschte Temperatur einzustellen, wird dieser Temperaturwert an den Durchflußregler 54 weitergegeben, der dann wiederum entsprechend die Menge an Kühlmedium, das durch die Bypassleitung strömt, einstellt und dadurch das Mischungsverhältnis an der Sammelvorrichtung 55 einstellt.

Bei dem in Figur 1 gezeigten Ausführungsbeispiel ist der Kühlkreis 24 geschlossen. Als Kühlmedium wird Wasser eingesetzt. Das Wasser nimmt in der Brennstoffzelleneinrichtung 12 Abwärme auf und gibt diese Abwärme in dem Latentwärmespeicher 34 ab. Dadurch wiederum läßt sich Wasser als Heizmedium des vom Kühlkreis 24 getrennten Heizkreises 42 aufheizen.

Da bei einer Hausheizung der elektrische Energiebedarf (geliefert durch die Brennstoffzelleneinrichtung 12) und der Heizungsbedarf (Heizenergie geliefert über den Heizkreis 42) üblicherweise nicht zeitlich synchron sind, ist ein Wärmepuffer nötig. Der Latentwärmespeicher 34 stellt einen solchen Wärmepuffer dar, über den sich auch der primäre Kreis, der Kühlkreis 24 und der sekundäre Kreis, der Heizkreis 42 bezüglich der Wärmeabfuhr entkoppeln lassen. Die Wärmeabfuhr aus der Brennstoffzelleneinrichtung 12 und die Wärmeabfuhr aus dem Latentwärmespeicher 34 müssen nicht gleichzeitig erfolgen.

Die Brennstoffzelleneinrichtung 12 kann mit der Abgabe elektrischer Energie dynamisch den Anforderungen des Verbrauchers folgen. Die dabei entstehende Abwärme wird bei gleichbleibendem Temperaturniveau mit geringer Schwankungsbreite in dem Latentwärmespeicher 34 gesammelt. Für Heizzwecke muß kein zusätzlich fossiles Verbrennungssystem vorgesehen werden.

Der Latentwärmespeicher 34 weist bei vorgegebenem Speichermedium eine definierte Phasenwechseltemperatur auf. Diese legt einen Arbeitspunkt für die Temperatur des der Brennstoffzelleneinrichtung 12 zugeführtem Kühlmedium fest. Dadurch wiederum ist bei geringer Schwankungsbreite die Temperatur von Kühlmedium, welches von der Brennstoffzelleneinrichtung 12 abgeführt wird, festgelegt. Über die Bypassleitung läßt sich aufbauend auf diesen Arbeitspunkt die Temperatur des Kühlmediums, welches der Brennstoffzelleneinrichtung 12 zugeführt wird, auf den für die Brennstoffzelleneinrichtung 12 optimierten Wert einstellen. Der Regelungsaufwand für die Kühleinrichtung 22 ist minimiert. Insbesondere genügt es, eine Mengenstromregelung durchzuführen.

Während des dynamischen Betriebs lassen sich Temperaturschwankungen an der Brennstoffzelleneinrichtung 12 minimieren und damit wiederum läßt sich die Lebensdauer der Brennstoffzelleneinrichtung 12 erhöhen.

Durch den Latentwärmespeicher 34 ist auch eine untere Temperatur für das Kühlmedium vorgegeben. Dadurch wiederum wird gewährleistet, daß die Temperatur der Brennstoffzelleneinrichtung 12 nicht unter eine Mindesttemperatur fällt.

Die Temperatur der Wärmeabgabe von dem Latentwärmespeicher 34 auf Heizmedium in dem Heizkreis 42 ist durch das Speichermedium festgelegt. Damit ergibt sich eine planbare Wärmeabgabetemperatur, so daß wiederum die Übergabeschnittstelle zwischen Kühlkreis 24 und Heizkreis 42 einfach planbar ist.

Der Latentwärmespeicher 34 läßt sich kompakt aufbauen mit hoher Speicherkapazität und hoher Temperaturkonstanz. Angepaßt an die jeweilige Brennstoffzelleneinrichtung 12 wird ein entsprechendes Speichermedium eingesetzt.

Insbesondere ist es vorgesehen, daß das Speichermedium eine Phasenwechseltemperatur bis zirka 150° C aufweist. Typische derzeitige Betriebstemperaturen sind zirka 80° C und darunter.

Es ist auch möglich, daß der Latentwärmespeicher 34 so ausgestaltet ist, daß das Latentwärmespeichermedium austauschbar ist. Es läßt sich dadurch eine Anpassung an Temperaturänderungen in der Brennstoffzelleneinrichtung 12 durchführen, wobei jedoch das Betriebsverhalten nicht verändert wird.

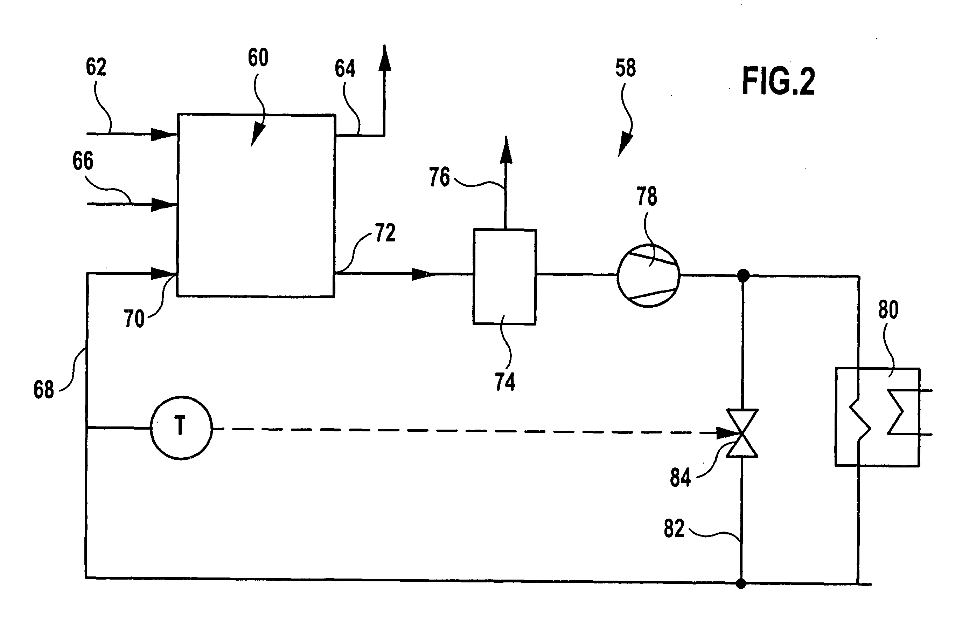

Bei einem zweiten Ausführungsbeispiel eines erfindungsgemäßen Heizungssystems, welches in Figur 2 als Ganzes mit 58 bezeichnet ist, ist eine Brennstoffzelleneinrichtung 60 vorgesehen, welche eine Zuführungseinrichtung 62 für Brennstoff und eine Abführungseinrichtung 64 für unverbrauchten Brennstoff umfaßt. Ferner ist eine Zuführungseinrichtung 66 für Luft mit Luftsauerstoff als Oxidationsmittel vorgesehen.

Die Kühleinrichtung umfaßt wiederum einen Kühlkreis 68, wobei der Kühlkreis 68 an einen Eingang 70 der Brennstoffzelleneinrichtung 60 gekoppelt ist. Über diesen Eingang 70 läßt sich Wasser als flüssiges Kühlmedium einkoppeln. Ferner ist der Kühlkreis 68 an einen Ausgang 72 der Brennstoffzelleneinrichtung 60 gekoppelt. Über diesen Ausgang 72 läßt sich ein Wasser-Luft-Gemisch von der Brennstoffzelleneinrichtung abführen, wobei die abgeführte Luft derjenige Luftanteil ist, welcher bei der chemischen Umsetzung von Brennstoff und Luftsauerstoff nicht verbraucht wurde.

Dem Ausgang 72 nachgeordnet ist eine Trennvorrichtung 74 für das Wasser-Luft-Gemisch, welches aus der Brennstoffzelleneinrichtung 60 ausgekoppelt wird. Luft wird über eine Abführungseinrichtung 76 abgeführt, während Wasser über eine Pumpe 78 zu einem Latentwärmespeicher 80 befördert wird. Im übrigen ist der Kühlkreis 68 gleich ausgebildet, wie oben anhand des ersten Ausführungsbeispiels 10 beschrieben. Insbesondere ist eine Bypassleitung 82 mit einem Durchflußregler 84 vorgesehen.

Das Heizungssystem gemäß dem zweiten Ausführungsbeispiel 58 funktioniert grundsätzlich gleich wie oben beschrieben, wobei der Kühlkreis ein Wasser-Luft-Kombinationskreislauf ist, zumindest zwischen dem Ausgang 72 und der Trennvorrichtung 74.

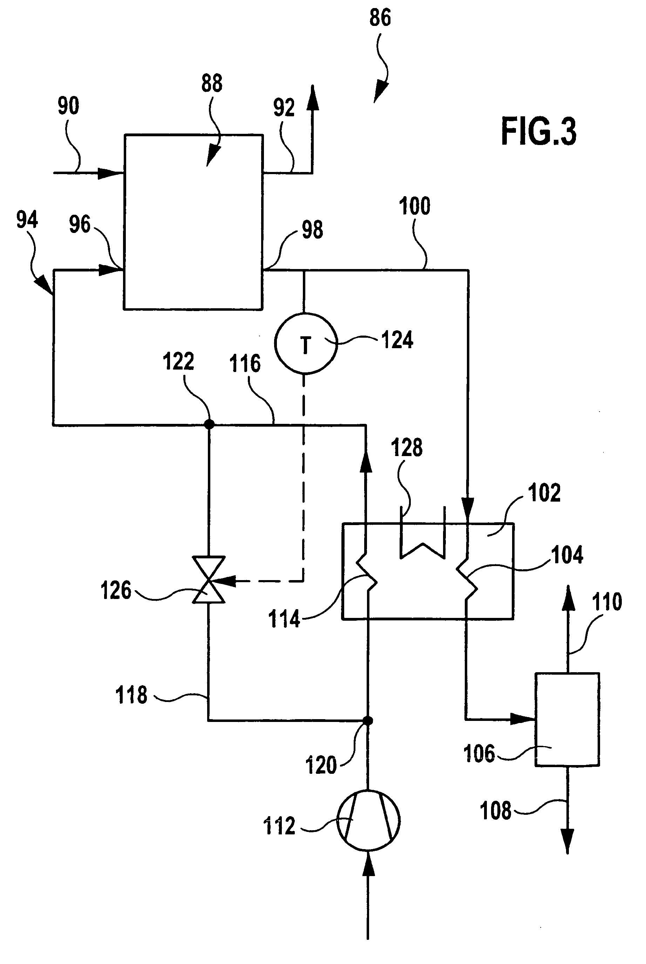

Bei einem dritten Ausführungsbeispiel eines erfindungsgemäßen Heizungssystems, welches in Figur 3 als Ganzes mit 86 bezeichnet ist, ist eine Brennstoffzelleneinrichtung 88 vorgesehen, welche eine Zuführungseinrichtung 90 für Brennstoff und eine Abführungseinrichtung 92 für nicht verbrauchten Brennstoff umfaßt. Ferner ist eine Zuführungseinrichtung für Luft mit Luftsauerstoff als Oxidationsmittel vorgesehen, wobei diese Zuführungseinrichtung in einen Kühlkreis 94 integriert ist. Über den Kühlkreis 94 wird Luft zu der Brennstoffzelleneinrichtung 88 transportiert, um Abwärme von der Brennstoffzelleneinrichtung 12 und insbesondere von Brennstoffzellenblöcken und Peripherieaggregaten abzuführen. Ein Teil der zugeführten Luft wird als Träger für das Oxidationsmittel eingesetzt.

Der Kühlkreis 94 ist dazu an einen Eingang 96 der Brennstoffzelleneinrichtung 88 gekoppelt. Ferner ist der Kühlkreis 94 an einen Ausgang 98 für Kühlmedium der Brennstoffzelleneinrichtung 88 gekoppelt.

Von dem Ausgang 98 führt eine Leitung 100 zu einem Latentwärmespeicher 102. Kühlmedium durchläuft den Latentwärmespeicher 102 über eine Durchlaufstrecke 104 (zweite Durchlaufstrecke) und gibt dabei Wärme an das Latentwärmespeichermedium im Latentwärmespeicher 102 ab.

Der Durchlaufstrecke 104 nachgeschaltet ist eine Trennvorrichtung 106, mittels der sich Wasser abscheiden läßt und über eine Abführungseinrichtung 108 abführen läßt. Ferner ist eine Abführungseinrichtung 110 für Luft vorgesehen.

Luft, welche der Brennstoffzelleneinrichtung 88 zugeführt wird, durchläuft einen Verdichter 112. Dem Verdichter 112 nachgeordnet ist eine Durchlaufstrecke 114 (erste Durchlaufstrecke) in dem Latentwärmespeicher 102. Die Durchlaufstrecken 104 und 114 sind parallel angeordnet. Die Durchlaufstrecke 114 wird von Luft durchströmt, um einen Arbeitspunkt für die Temperatur von Luft als der Brennstoffzelleneinrichtung 88 zugeführtes Kühlmedium einzustellen.

Die Durchlaufstrecke 114 ist über eine Leitung 116 außerhalb des Latentwärmespeichers 102 mit dem Eingang 96 der Brennstoffzelleneinrichtung 88 verbunden.

Eine Bypassleitung 118, welche parallel zur Durchlaufstrecke 114 angeordnet ist, überbrückt den Latentwärmespeicher 102, indem ein Eingang 120 der Bypassleitung 118 dem Verdichter 112 nachgeschaltet, jedoch dem Latentwärmespeicher 102 vorgeschaltet ist. Ein Ausgang 122 der Bypassleitung 118 ist an die Leitung 116 gekoppelt.

Ein Temperatursensor 124 ermittelt die Temperatur des Kühlmediums, welches von der Brennstoffzelleneinrichtung 88 abgeführt wird. Der Temperatursensor 124 ist mit einem Durchflußregler 126 verbunden, welcher in der Bypassleitung 118 angeordnet ist. Über den Durchflußregler 126 läßt sich die Luftmenge steuern, welche unter Umgehung des Latentwärmespeichers 102 in die Leitung 116 eingekoppelt wird.

Durch den Latentwärmespeicher 102 wird die Temperatur der Luft, welche die Durchlaufstrecke 104 durchströmt, als Arbeitspunkt festgelegt. Über eine Mengensteuerung beziehungsweise Mengenregelung der die Bypassleitung 118 durchströmenden Luft läßt sich die Temperatur der Luft, welche über den Eingang 26 der Brennstoffzelleneinrichtung 88 zugeführt wird, regeln. Die Temperatur wird dabei über den Temperatursensor 124 überwacht, der die Ausgangstemperatur des Kühlmediums ermittelt.

Das Heizungssystem 86 funktioniert grundsätzlich gleich wie oben bereits beschrieben. Insbesondere ist ein Heizkreis 128 an den Latentwärmespeicher 102 gekoppelt, um Abwärme abführen zu können.

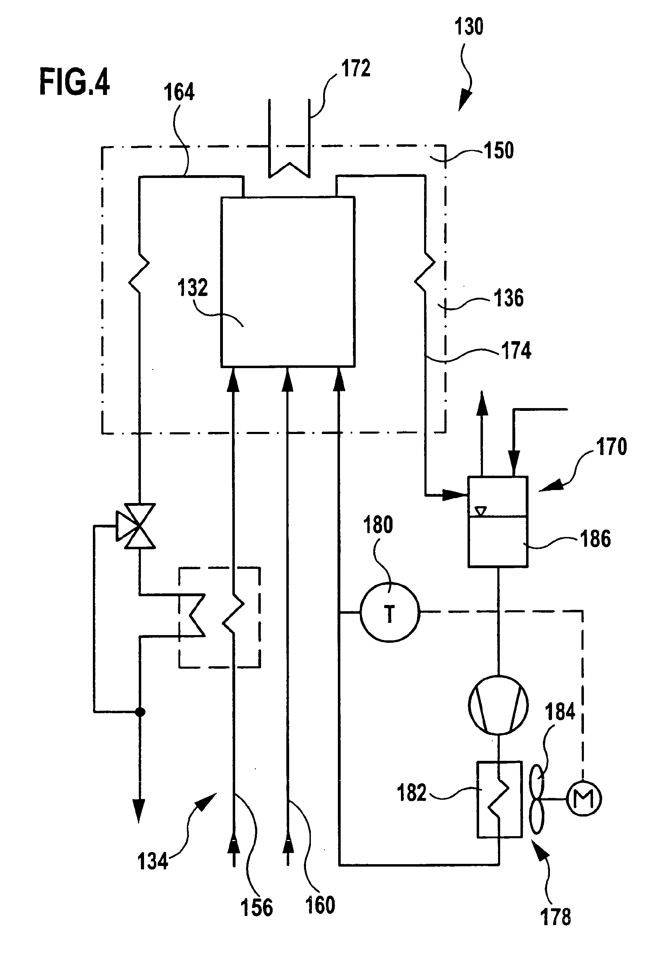

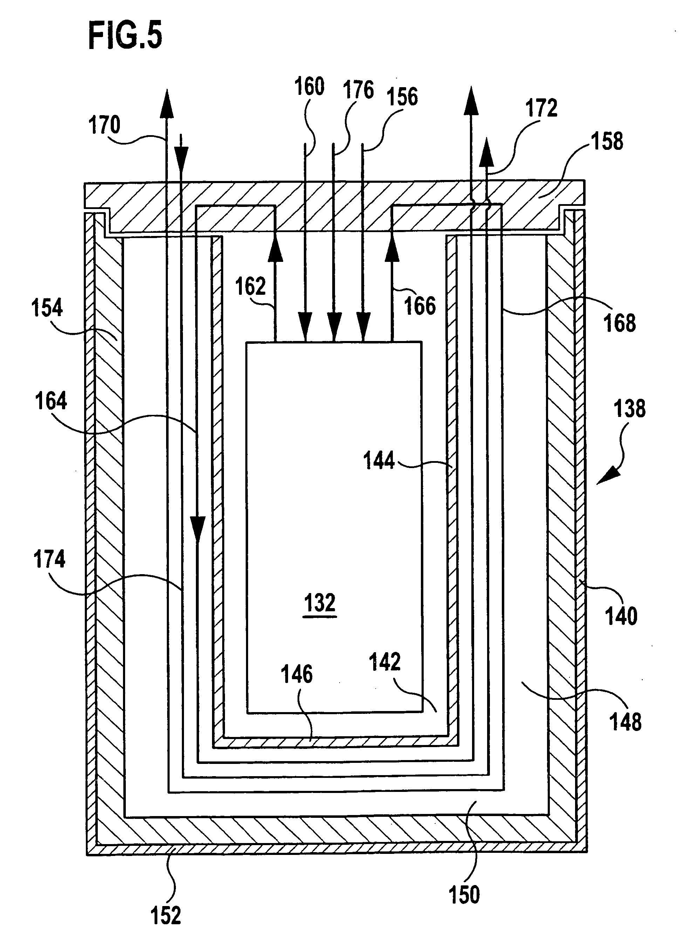

Bei einem vierten Ausführungsbeispiel, welches in Figur 4 als Ganzes mit 130 bezeichnet ist, ist ein Brennstoffzellenblock 132 einer Brennstoffzelleneinrichtung 134 in einem Latentwärmespeicher 136 angeordnet (vergleiche auch Figur 5).

Der Latentwärmespeicher 136 umfaßt einen Behälter 138 (Figur 5) gebildet, welcher eine Außenwand 140 aufweist. In dem Behälter ist ein Innenraum 142 zur Aufnahme des Brennstoffzellenblocks 132 gebildet. Der Innenraum 142 ist durch eine Innenwand 144 und einen Innenboden 146 begrenzt.

Zwischen der Innenwand 144 und der Außenwand 140 ist ein Raum 148 zur Aufnahme von Latentspeichermedium 150 gebildet. Vorzugsweise erstreckt sich dieser Raum 148 auch auf den Zwischenbereich zwischen dem Innenboden 146 und einem Außenboden 152 unterhalb des Brennstoffzellenblocks 132. Dadurch läßt sich der Brennstoffzellenblock 132 von Latentspeichermedium 150 umgeben.

Der Raum 148 ist zu der Außenwand 140 hin durch eine Isolierung 154 begrenzt beziehungsweise umgeben, um die Wärmeverluste an die Umgebung zu minimieren.

Zur Zuführung von Luft zu dem Brennstoffzellenblock 132 ist eine Zuführungseinrichtung 156 vorgesehen, welche durch einen Behälterdeckel 158 geht. Ferner ist eine Zuführungseinrichtung 160 für Brennstoff vorgesehen.

Es kann vorgesehen sein, daß eine Abführungseinrichtung 162 für unverbrauchten Brennstoff eine Leitung 164 umfaßt, welche durch das Latentspeichermedium 150 des Latentspeichers 136 geführt ist. Die Leitung 164 ist insbesondere rohrwendelförmig ausgestaltet. Dadurch läßt sich Brennstoff vor der Abführung kühlen.

Gemäß einem Ausführungsbeispiel ist eine Abführungseinrichtung 166 für Kühlmedium vorgesehen, welche eine Leitung 168 umfaßt, die durch das Latentspeichermeduim 150 verläuft. Diese Leitung 168 ist Teil eines Kühlkreises 170. Das von dem Brennstoffzellenblock 132 abgeführte Kühlmedium gibt thermische Energie an den Latentwärmespeicher 136 ab, wie es oben beschrieben wurde.

Ein Heizkreis 172 umfaßt eine Leitung 174, welche durch das Latentspeichermedium geführt ist, damit Heizmedium Wärme aufnehmen kann.

Es kann Luft und/oder Wasser als Kühlmedium eingesetzt werden. Bei Wasser als Kühlmedium ist als Teil des Kühlkreises 170 eine Zuführungseinrichtung 176 für Wasser zu dem Brennstoffzellenblock 132 vorgesehen. Die Leitung 168 dient dann zur Abfuhr von Kühlwasser. Es ist möglich, wie anhand der Figur 2 beschrieben, einen Wasser-Luft-Kombinationskühlkreislauf einzusetzen.

In Figur 4 ist ein Wasserkühlkreislauf näher beschrieben.

In dem Kühlkreis 170 kann dabei noch eine Kühlvorrichtung 178 für das Wasser als Kühlmedium vorgesehen sein (Figur 4) . Die Kühlvorrichtung 178 wird dabei insbesondere mittels eines Temperatursensors 180 gesteuert, über welchen die Temperatur von Kühlmedium ermittelt wird, welches in dem Brennstoffzellenblock 132 eingekoppelt wird. (In dem gezeigten Ausführungsbeispiel umfaßt die Kühlvorrichtung 178 eine Durchlaufstrecke 182 und einen motorbetriebenen Ventilator 184 zur Abkühlung von Wasser in der Durchlaufstrecke 182. Die Drehzahl des Ventilators 184 wird entsprechend dem Signal des Temperatursensors 180 eingestellt.)

Weiterhin kann eine Vorrichtung 186 zur Nachspeisung von Kühlwasser vorgesehen sein.

Das Heizungssystem gemäß dem vierten Ausführungsbeispiel 130 läßt sich kompakt bauen und so insbesondere mobil wie beispielsweise in einem Fahrzeug einsetzen.

## Patentansprüche

1. Heizungssystem, welches eine Brennstoffzelleneinrichtung (12; 60; 88; 134) und eine Kühleinrichtung (22) für die Brennstoffzelleneinrichtung (12; 60; 88; 134) umfasst,
**dadurch gekennzeichnet, dass** ein Latentwärmespeicher (34; 80; 102; 136) an einen Kühlkreis (24; 68; 94; 170) der Kühleinrichtung (22) gekoppelt ist und dass ein Heizkreis (42; 128; 172) an den Latentwärmespeicher (34; 80; 102; 136) gekoppelt ist, wobei Heizmedium durch den Latentwärmespeicher (34; 80; 102; 136) zur Wärmeaufnahme geführt.

2. Heizungssystem nach Anspruch 1, **dadurch gekennzeichnet, dass** der Latentwärmespeicher (34; 80; 102; 136) einem Ausgang (28; 72; 98) für Kühlmedium der Brennstoffzelleneinrichtung (12; 60; 88; 134) nachgeschaltet angeordnet ist.

3. Heizungssystem nach einem der vorangehenden Ansprüche, **dadurch gekennzeichnet, dass** Kühlmedium durch den Latentwärmespeicher (34; 80; 102; 136) zur Wärmeabgabe geführt ist.

4. Heizungssystem nach einem der vorangehenden Ansprüche, **dadurch gekennzeichnet, dass** mittels des Latentwärmespeichers (34; 80; 102; 136) die Temperatur von der Brennstoffzelleneinrichtung (12; 60; 88; 134) zugeführtem Kühlmedium eingestellt ist.

5. Heizungssystem nach einem der vorangehenden Ansprüche, **dadurch gekennzeichnet, dass** eine Mengensteuerung und/oder Mengenregelung des der Brennstoffzelleneinrichtung (12; 60; 88; 134) zugeführten Kühlmediums erfolgt.

6. Heizungssystem nach einem der vorangehenden Ansprüche, **dadurch gekennzeichnet, dass** der Kühlkreis (24; 68; 94) eine Bypassleitung (48; 82; 118) für den Latentwärmespeicher (34; 80; 102) umfasst.

7. Heizungssystem nach Anspruch 6, **dadurch gekennzeichnet, dass** die Bypassleitung (48; 82; 118) parallel zum Latentwärmespeicher (34; 80; 102) angeordnet ist.

8. Heizungssystem nach Anspruch 6 oder 7, **dadurch gekennzeichnet, dass** ein Ausgang (52) der Bypassleitung (48) mit einem Eingang (26) der Brennstoffzelleneinrichtung (12) verbunden ist.

9. Heizungssystem nach einem der Ansprüche 6 bis 8, **dadurch gekennzeichnet, dass** ein Eingang (50) der Bypassleitung (48) bezogen auf die Strömungsrichtung von Kühlmedium der Brennstoffzelleneinrichtung (12) nachgeschaltet angeordnet ist.

10. Heizungssystem nach einem der Ansprüche 6 bis 8, **dadurch gekennzeichnet, dass** ein Eingang (120) der Bypassleitung (118) bezogen auf die Strömungsrichtung von Kühlmedium der Brennstoffzelleneinrichtung (88) vorgeschaltet angeordnet ist.

11. Heizungssystem nach einem der Ansprüche 6 bis 10, **dadurch gekennzeichnet, dass** die Menge an Kühlmedium, welche durch die Bypassleitung (48; 82; 118) strömt, steuerbar und/oder regelbar ist.

12. Heizungssystem nach Anspruch 11, **dadurch gekennzeichnet, dass** eine Mengensteuerung und/oder Mengenregelung des der Brennstoffzelleneinrichtung (12; 60;88) zugeführten Kühlmediums über Einkopplung von Kühlmedium aus der Bypassleitung (48; 82; 118) erfolgt.

13. Heizungssystem nach einem der Ansprüche 6 bis 12, **dadurch gekennzeichnet, dass** in der Bypassleitung (48; 82; 118) ein Durchflussregler (54; 84; 126) angeordnet ist.

14. Heizungssystem nach Anspruch 13, **dadurch gekennzeichnet, dass** der Durchflussregler (54; 84; 126) über die Temperatur von Kühlmedium gesteuert ist.

15. Heizungssystem nach Anspruch 14, **dadurch gekennzeichnet, dass** ein Temperatursensor (56) zur Messung der Temperatur von der Brennstoffzelleneinrichtung (12) zugeführtem Kühlmedium vorgesehen ist.

16. Heizungssystem nach Anspruch 14 oder 15, **dadurch gekennzeichnet, dass** ein Temperatursensor (124) zur Messung der Temperatur von von der Brennstoffzelleneinrichtung (88) abgeführtem Kühlmedium vorgesehen ist.

17. Heizungssystem nach einem der vorangehenden Ansprüche, **dadurch gekennzeichnet, dass** der Kühlkreis (24) ein geschlossener Kreis ist.

18. Heizungssystem nach Anspruch 17, **dadurch gekennzeichnet, dass** ein Eingang (32) für Kühlmedium des Latentwärmespeichers (34) an einen Ausgang (28) für Kühlmedium der Brennstoffzelleneinrichtung (12) gekoppelt ist und ein mit dem Eingang (32) verbundener Ausgang (36) des Latentwärmespeichers (34) an einen Eingang (26) für Kühlmedium der Brennstoffzelleneinrichtung (12) gekoppelt ist.

19. Heizungssystem nach einem der Ansprüche 1 bis 16, **dadurch gekennzeichnet, dass** der Kühlkreis (94) offen ist.

20. Heizungssystem nach Anspruch 19, **dadurch gekennzeichnet, dass** der Latentwärmespeicher (102) eine erste Durchlaufstrecke (114) für Kühlmedium zur Zuführung von Kühlmedium zu der Brennstoffzelleneinrichtung (88) und eine zweite Durchlaufstrecke (104) für Kühlmedium zur Abführung von Kühlmedium von der Brennstoffzelleneinrichtung (88) umfasst.

21. Heizungssystem nach einem der vorangehenden Ansprüche, **dadurch gekennzeichnet, dass** die Brennstoffzelleneinrichtung (12; 60; 88; 134) eine oder mehrere Niedertemperatur-Brennstoffzellen umfasst.

22. Heizungssystem nach einem der vorangehenden Ansprüche, **dadurch gekennzeichnet, dass** als Kühlmedium Wasser eingesetzt ist.

23. Heizungssystem nach einem der vorangehenden Ansprüche, **dadurch gekennzeichnet, dass** als Kühlmedium Wasser und Luft eingesetzt ist.

24. Heizungssystem nach Anspruch 23, **dadurch gekennzeichnet, dass** eine Trennvorrichtung (74) für Wasser und Luft vorgesehen ist.

25. Heizungssystem nach Anspruch 24, **dadurch gekennzeichnet, dass** die Trennvorrichtung dem Latentwärmespeicher (80) vorgeschaltet ist.

26. Heizungssystem nach einem der Ansprüche 1 bis 21, **dadurch gekennzeichnet, dass** als Kühlmedium Luft eingesetzt ist.

27. Heizungssystem nach Anspruch 26, **dadurch gekennzeichnet, dass** Luft vor Einkopplung in die Brennstoffzelleneinrichtung (88) durch den Latentwärmespeicher (102) führbar ist.

28. Heizungssystem nach einem der vorangehenden Ansprüche, **dadurch gekennzeichnet, dass** ein Brennstoffzellenblock (132) von dem Latentwärmespeicher (136) umgeben ist.

29. Heizungssystem nach Anspruch 28, **dadurch gekennzeichnet, dass** ein Behälter (138) mit einem Innenraum (142) vorgesehen ist, in welchem der Brennstoffzellenblock (132) angeordnet ist, und der Innenraum (142) von einem Raum (148) umgeben ist, in dem Latentwärmespeichermedium (150) angeordnet ist.

30. Heizungssystem nach Anspruch 28 oder 29, **dadurch gekennzeichnet, dass** der Behälter Anschlüsse für Medien-Zufuhr und Medien-Abfuhr aufweist.

31. Verwendung des Heizungssystems gemäß einem der vorangehenden Ansprüche zur Beheizung eines Hauses.

32. Verwendung nach Anspruch 31 zur elektrischen Versorgung des Hauses.

33. Verwendung des Heizungssystems nach einem der Ansprüche 1 bis 30 zur Beheizung eines Fahrzeugs.

34. Verwendung nach Anspruch 33 zur elektrischen Energieversorgung des Fahrzeugs.

35. Verfahren zum Betreiben einer Brennstoffzelleneinrichtung (12; 60; 88; 104), welche mittels eines Kühlmediums gekühlt wird, **dadurch gekennzeichnet, dass** das Kühlmedium in einem Kühlkreis (24; 68; 94; 170) durch einen Latentwärmespeicher (34; 80; 102 136) geführt wird und dass Heizwärme von dem Latentwärmespeicher an einen Heizkreis (42; 128; 172) abgeführt wird.

36. Verfahren nach Anspruch 35, **dadurch gekennzeichnet, dass** ein Arbeitspunkt für die Temperatur von der Brennstoffzelleneinrichtung zugeführtem Kühlmedium durch den Latentwärmerspeicher eingestellt wird.

37. Verfahren nach Anspruch 36, **dadurch gekennzeichnet, dass** zur Temperatureinstellung Kühlmedium, welches den Latentwärmespeicher nicht durchlaufen hat, mit Kühlmedium, welches den Latentwärmespeicher durchlaufen hat, mischbar ist.

38. Verfahren nach Anspruch 37, **dadurch gekennzeichnet, dass** die Mischung über eine ermittelte Temperatur des Kühlmediums gesteuert und/oder geregelt wird.

39. Verfahren nach einem der Ansprüche 35 bis 38, **dadurch gekennzeichnet, dass** eine Mengensteuerung und/oder Mengenregelung des der Brennstoffzelleneinrichtung zugeführten Kühlmediums durchgeführt wird.

40. Verfahren nach einem der Ansprüche 35 bis 39, **dadurch gekennzeichnet, dass** der Latentwärmespeicher an einen externen Kreis gekoppelt ist.

## Claims

1. Heating system, comprising a fuel cell device (12; 60; 88; 1.34) and a cooling device (22) for the fuel cell device (12; 60; 88; 134),
**characterized in that** a latent heat storage device (34; 80; 102; 136) is coupled to a cooling circuit (24; 68; 94; 170) of the cooling device (22) and that a heating circuit (42; 128; 172) is coupled to the latent heat storage device (34; 80; 102; 136), herein heating medium is conveyed for heat absorption purposes through the latent heat storage device (34; 80; 102; 136).

2. Heating system according to claim 1, **characterized in that** the latent heat storage device (34; 80; 102; 136) is disposed downstream of an outlet (28; 72; 98) for cooling medium of the fuel cell device (12; 60; 88; 134).

3. Heating system according to one of the preceding claims, **characterized in that** cooling medium is conveyed for heat removal purposes through the latent heat storage device (34; 80; 102; 136).

4. Heating system according to one of the preceding claims, **characterized in that** by means of the latent heat storage device (34; 80; 102; 136) the temperature of cooling medium supplied to the fuel cell device (12; 60; 88; 134) is adjusted.

5. Heating system according to one of the preceding claims, **characterized in that** there is effected a control and/or regulation of the quantity of cooling medium supplied to the fuel cell device (12; 60; 88; 134).

6. Heating system according to one of the preceding claims, **characterized in that** the cooling circuit (24; 68; 94) comprises a bypass line (48; 82; 118) for the latent heat storage device (34; 80; 102).

7. Heating system according to claim 6, **characterized in that** the bypass line (48; 82; 118) is disposed parallel to the latent heat storage device (34; 80; 102).

8. Heating system according to claim 6 or 7, **characterized in that** an outlet (52) of the bypass line (48) is connected to an inlet (26) of the fuel cell device (12).

9. Heating system according to one of claims 6 to 8, **characterized in that** an inlet (50) of the bypass line (48) is disposed, in relation to the direction of flow of cooling medium, downstream of the fuel cell device (12) .

10. Heating system according to one of claims 6 to 8, **characterized in that** an inlet (120) of the bypass line (118) is disposed, in relation to the direction of flow of cooling medium, upstream of the fuel cell device (88).

11. Heating system according to one of claims 6 to 10, **characterized in that** the quantity of cooling medium flowing through the bypass line (48; 82; 118) may be controlled and/or regulated.

12. Heating system according to claim 11, **characterized in that** a control and/or regulation of the quantity of cooling medium supplied to the fuel cell device (12; 60; 88) is effected by injecting cooling medium from the bypass line (48; 82; 118).

13. Heating system according to one of claims 6 to 12, **characterized in that** in the bypass line (48; 82; 118) a flow regulator (54; 84; 126) is disposed.

14. Heating system according to claim 13, **characterized in that** the flow regulator (54; 84; 126) is controlled by means of the temperature of cooling medium.

15. Heating system according to claim 14, **characterized in that** a temperature sensor (56) is provided for measuring the temperature of cooling medium supplied to the fuel cell device (12).

16. Heating system according to claim 14 or 15, **characterized in that** a temperature sensor (124) is provided for measuring the temperature of cooling medium removed from the fuel cell device (88).

17. Heating system according to one of the preceding claims, **characterized in that** the cooling circuit (24) is a closed circuit.

18. Heating system according to claim 17, **characterized in that** an inlet (32) for cooling medium of the latent heat storage device (34) is coupled to an outlet (28) for cooling medium of the fuel cell device (12), and an outlet (36) of the latent heat storage device (34) that is connected to the inlet (32) is coupled to an inlet (26) for cooling medium of the fuel cell device (12).

19. Heating system according to one of claims 1 to 16, **characterized in that** the cooling circuit (94) is open.

20. Heating system according to claim 19, **characterized in that** the latent heat storage device (102) comprises a first run-through section (114) for cooling medium for supplying cooling medium to the fuel cell device (88) as well as a second run-through section (104) for cooling medium for removing cooling medium from the fuel cell device (88).

21. Heating system according to one of the preceding claims, **characterized in that** the fuel cell device (12; 60; 88; 134) comprises one or more low-temperature fuel cells.

22. Heating system according to one of the preceding claims, **characterized in that** water is used as a cooling medium.

23. Heating system according to one of the preceding claims, **characterized in that** water and air are used as a cooling medium.

24. Heating system according to claim 23, **characterized in that** a separating apparatus (74) for water and air is provided.

25. Heating system according to claim 24, **characterized in that** the separating apparatus is disposed upstream of the latent heat storage device (80).

26. Heating system according to one of claims 1 to 21, **characterized in that** air is used as a cooling medium.

27. Heating system according to claim 26, **characterized in that** air, prior to being injected into the fuel cell device (88), can be conveyed through the latent heat storage device (102).

28. Heating system according to one of the preceding claims, **characterized in that** a fuel cell block is surrounded by the latent heat storage device (136).

29. Heating system according to claim 28, **characterized in that** a container (138) is provided with an internal space (142), in which the fuel cell block (132) is disposed, and the internal space (142) is surrounded by a space (148), in which latent heat storage medium (150) is disposed.

30. Heating system according to claim 28 or 29, **characterized in that** the container has connections for media supply and media removal.

31. Use of the heating system according to one of the preceding claims for heating a house.

32. Use according to claim 31 for the electrical supply of the house.

33. Use of the heating system according to one of claims 1 to 30 for heating a vehicle.

34. Use according to claim 33 for the electrical energy supply of the vehicle.

35. Method of operating a fuel cell device (12; 60; 88; 134) that is cooled by means of a cooling medium, **characterized in that** the cooling medium is conveyed in a cooling circuit (24; 68; 94; 170) through a latent heat storage device (34; 80; 102; 136) and that heat for heating purposes is removed from the latent heat storage device to a heating circuit (42; 128; 172).

36. Method according to claim 35, **characterized in that** an operating point for the temperature of cooling medium supplied to the fuel cell device is adjusted by means of the latent heat storage device.

37. Method according to claim 36, **characterized in that** for the temperature adjustment cooling medium that has not passed through the latent heat storage device can be mixed with cooling medium that has passed through the latent heat storage device.

38. Method according to claim 37, **characterized in that** the mixing is controlled and/or regulated by means of a detected temperature of the cooling medium.

39. Method according to one of claims 35 to 38, **characterized in that** there is undertaken a control and/or regulation of the quantity of cooling medium supplied to the fuel cell device.

40. Method according to one of claims 35 to 39, **characterized in that** the latent heat storage device is coupled to an external circuit.

## Revendications

1. Système de chauffage, qui comporte un ensemble pile à combustible (12 ; 60 ; 88 ; 134) et un ensemble de refroidissement (22) destiné à l'ensemble pile à combustible (12 ; 60 ; 88 ; 134),
**caractérisé en ce qu'**un régulateur thermique à changement d'état (34 ; 80 ; 102 ; 136) est couplé à un circuit de refroidissement (24 ; 68 ; 94 ; 170) de l'ensemble de refroidissement (22) et **en ce qu'**un circuit de chauffage (42 ; 128 ; 172) est couplé au régulateur thermique à changement d'état (34 ; 80 ; 102 ; 136), un fluide caloporteur étant apporté par le régulateur thermique à changement d'état (34 ; 80 ; 102 ; 136) à des fins d'absorption de chaleur.

2. Système de chauffage selon la revendication 1, **caractérisé en ce que** le régulateur thermique à changement d'état (34 ; 80 ; 102 ; 136) est disposé en aval d'une sortie (28 ; 72 ; 98) pour le fluide réfrigérant de l'ensemble pile à combustible (12 ; 60 ; 88 ; 134).

3. Système de chauffage selon l'une quelconque des revendications précédentes, **caractérisé en ce que** le fluide réfrigérant est apporté par le régulateur thermique à changement d'état (34 ; 80 ; 102 ; 136) à des fins de dissipation de chaleur.

4. Système de chauffage selon l'une quelconque des revendications précédentes, **caractérisé en ce que** la température du fluide réfrigérant apporté à l'ensemble pile à combustible (12 ; 60 ; 88 ; 134) est réglée au moyen du régulateur thermique à changement d'état (34 ; 80 ; 102 ; 136).

5. Système de chauffage selon l'une quelconque des revendications précédentes, **caractérisé en ce qu'**on effectue une commande du débit et/ou une régulation du débit du fluide réfrigérant apporté à l'ensemble pile à combustible (12 ; 60 ; 88 ; 134).

6. Système de chauffage selon l'une quelconque des revendications précédentes, **caractérisé en ce que** le circuit de refroidissement (24 ; 68 ; 94) comporte une ligne de dérivation (48 ; 82 ; 118) pour le régulateur thermique à changement d'état (34; 80 ; 102).

7. Système de chauffage selon la revendication 6, **caractérisé en ce que** la ligne de dérivation (48; 82 ; 118) est disposée parallèlement au régulateur thermique à changement d'état (34 ; 80 ; 102).

8. Système de chauffage selon la revendication 6 ou 7, **caractérisé en ce qu'**une sortie (52) de la ligne de dérivation (48) est reliée à une entrée (26) de l'ensemble pile à combustible (12).

9. Système de chauffage selon l'une des revendications 6 à 8, **caractérisé en ce qu'**une entrée (50) de la ligne de dérivation (48) est disposée en aval par rapport au sens d'écoulement du fluide réfrigérant de l'ensemble pile à combustible (12).

10. Système de chauffage selon l'une des revendications 6 à 8, **caractérisé en ce qu'**une entrée (120) de la ligne de dérivation (118) est disposée en amont par rapport au sens d'écoulement du fluide réfrigérant de l'ensemble pile à combustible (88).

11. Système de chauffage selon l'une des revendications 6 à 10, **caractérisé en ce que** le débit du fluide réfrigérant qui s'écoule dans la ligne de dérivation (48 ; 82 ; 118), peut être commandé et/ou régulé.

12. Système de chauffage selon la revendication 11, **caractérisé en ce qu'**une commande du débit et/ou une régulation du débit du fluide réfrigérant apporté à l'ensemble pile à combustible (12 ; 60 ; 88) est effectuée par un couplage du fluide réfrigérant à partir de la ligne de dérivation (48 ; 82 ; 118).

13. Système de chauffage selon l'une des revendications 6 à 12, **caractérisé en ce qu'**un régulateur d'écoulement (54 ; 84 ; 126) est monté dans la ligne de dérivation (48; 82 ; 118).

14. Système de chauffage selon la revendication 13, **caractérisé en ce que** le régulateur d'écoulement (54 ; 84 ; 126) est commandé par le biais de la température d'un fluide réfrigérant.

15. Système de chauffage selon la revendication 14, **caractérisé en ce qu'**il est prévu une sonde de température (56) servant à mesurer la température du fluide réfrigérant apporté à l'ensemble pile à combustible (12).

16. Système de chauffage selon la revendication 14 ou 15, **caractérisé en ce qu'**il est prévu une sonde de température (124) servant à mesurer la température du fluide réfrigérant évacué de l'ensemble pile à combustible (88).

17. Système de chauffage selon l'une quelconque des revendications précédentes, **caractérisé en ce que** le circuit de refroidissement (24) est un circuit fermé.

18. Système de chauffage selon la revendication 17, **caractérisé en ce qu'**une entrée (32) pour le fluide réfrigérant du régulateur thermique à changement d'état (34) est couplée à une sortie (28) pour le fluide réfrigérant de l'ensemble pile à combustible (12) et une sortie (36) du régulateur thermique à changement d'état (34) reliée à l'entrée (32) est couplée à une entrée (26) pour le fluide réfrigérant de l'ensemble pile à combustible (12).

19. Système de chauffage selon l'une des revendications 1 à 16, **caractérisé en ce que** le circuit de refroidissement (94) est ouvert.

20. Système de chauffage selon la revendication 19, **caractérisé en ce que** le régulateur thermique à changement d'état (102) comporte une première section de passage (114) pour fluide réfrigérant destinée à apporter le fluide réfrigérant à l'ensemble pile à combustible (88) et une deuxième section de passage (104) pour fluide réfrigérant destinée à évacuer le fluide réfrigérant de l'ensemble pile à combustible (88).

21. Système de chauffage selon l'une quelconque des revendications précédentes, **caractérisé en ce que** l'ensemble pile à combustible (12 ; 60 ; 88 ; 134) comporte une ou plusieurs piles à combustible à basse température.

22. Système de chauffage selon l'une quelconque des revendications précédentes, **caractérisé en ce que** de l'eau est employée en tant que fluide réfrigérant.

23. Système de chauffage selon l'une quelconque des revendications précédentes, **caractérisé en ce que** de l'eau et de l'air sont employées en tant que fluide réfrigérant.

24. Système de chauffage selon la revendication 23, **caractérisé en ce qu'**il est prévu un dispositif de séparation (74) pour l'eau et l'air.

25. Système de chauffage selon la revendication 24, **caractérisé en ce que** le dispositif de séparation est monté en amont du régulateur thermique à changement d'état (80).

26. Système de chauffage selon l'une des revendications 1 à 21, **caractérisé en ce que** de l'air est employé en tant que fluide réfrigérant.

27. Système de chauffage selon la revendication 26, **caractérisé en ce que** de l'air peut être apporté par le régulateur thermique à changement d'état (102) avant le couplage dans l'ensemble pile à combustible (88).

28. Système de chauffage selon l'une quelconque des revendications précédentes, **caractérisé en ce qu'**un bloc de cellules de pile à combustible (132) est entouré par le régulateur thermique à changement d'état (136).

29. Système de chauffage selon la revendication 28, **caractérisé en ce qu'**il est prévu un récipient (138) ayant un espace intérieur (142) dans lequel est disposé le bloc de cellules de pile à combustible (132), et **en ce que** l'espace intérieur (142) est entouré par une chambre (148) dans laquelle est disposé un fluide du régulateur thermique à changement d'état (150).

30. Système de chauffage selon la revendication 28 ou 29, **caractérisé en ce que** le récipient comporte des raccords pour l'apport du fluide et pour l'évacuation du fluide.

31. Utilisation du système de chauffage selon l'une quelconque des revendications précédentes pour le chauffage d'une maison.

32. Utilisation selon la revendication 31 pour l'alimentation électrique de la saison.

33. Utilisation du système de chauffage selon l'une des revendications 1 à 30 pour chauffer un véhicule.

34. Utilisation selon la revendication 33 pour l'alimentation électrique du véhicule.

35. Procédé de fonctionnement d'un ensemble pile à combustible (12 ; 60 ; 88 ; 134) qui est refroidi au moyen d'un fluide réfrigérant, **caractérisé en ce que** le fluide réfrigérant est apporté dans un circuit de refroidissement (24 ; 68 ; 94 ; 170) par un régulateur thermique à changement d'état (34 ; 80 ; 102 ; 136) et **en ce que** la chaleur de chauffage est fournie à un circuit de chauffage (42 ; 128 ; 172) par le régulateur thermique à changement d'état.

36. Procédé selon la revendication 35, **caractérisé en ce qu'**un point de fonctionnement pour la température du fluide réfrigérant apporté à l'ensemble pile à combustible est réglé par le régulateur thermique à changement d'état.

37. Procédé selon la revendication 36, **caractérisé en ce que** un fluide réfrigérant, qui n'a pas traversé le régulateur thermique à changement d'état, peut être mélangé avec un fluide réfrigérant qui a traversé le régulateur thermique à changement d'état, pour le réglage de la température.

38. Procédé selon la revendication 37, **caractérisé en ce que** le mélange est commandé et/ou régulé par le biais d'une température déterminée du fluide réfrigérant.

39. Procédé selon l'une des revendications 35 à 38, **caractérisé en ce qu'**on exécute une commande du débit et/ou une régulation du débit du fluide réfrigérant apporté à l'ensemble pile à combustible.

40. Procédé selon l'une des revendications 35 à 39, **caractérisé en ce que** le régulateur thermique à changement d'état est couplé à un circuit externe.
